# EUROPEAN PATENT APPLICATION

(11) **EP 2 336 951 A1**
(43) Date of publication of application: **22.06.2011**
(21) Application number: 10382293.8
(22) Date of filing: 10.11.2010
(51) Int. Cl.: G06K 19/077, H01Q 1/22

(54) **RFID device**

(30) Priority: 11.11.2009 ES 200930631 U
(71) Applicant: Bioaccez Controls, S.L., 08560 Manlleu Barcelona (ES)
(72) Inventor: Parladé Vilanova, Ramón, 08560 Manlleu (ES)
(74) Representative: Diaz Nunez, Joaquin

(57) **Abstract**

RFID device, of the kind that they comprises an encoded RFID data signal generator chip (1) connected to a dipole antenna with two opposing tracks (2 and 3) for the transmission via radio, and is characterized in that one of the track (3) of the antenna is bent in three-dimensional form configuring portions (31, 32, 33, and/or 34) in at least three orthogonal planes inter se for the radiation of the signal in all directions; and in that the antenna comprises in a plane, track portions (2 and 31) in dipole configuration and, in the remaining planes, track portions (32, 33, and/or 34) in configuration of reflectors.

## Description

### Object of the invention

The present invention relates to a RFID device, of the kind that they communicate each other via radio frequency.

### Background of the invention

Currently, the RFID devices are widely used for the identification of objects, animals, and even humans, both for its localization and for the control of passage through a place. These RFID devices, designed as electronic tags, also have the particularity of transmit various data, operating robustly and quickly.

A RFID device mainly comprises an encoded RFID data signal generator chip connected to an antenna for its transmission via radio. In some cases it is used a box-type antenna with a conductive track around the chip several times and, in others cases, this antenna is a dipole-type antenna with two conductive opposing tracks on both sides of the generator chip for its transmission.

In all cases, the antenna is usually configured in the same plate or flat support, for example an adhesive paper, in which is located the generator chip in coplanar form. This causes that the radiation of the signal is transmitted with more power in certain directions than in others.

These RFID devices present the disadvantage that when are applied on a human or animal body, the real gain of the antenna is reduced since the radio waves are absorbed by the body fluids. This absorption is increased due to the flat RFID device is usually placed on the human or animal body, focusing one of the main directions of emission to the body. This absorption of the emitted power by the antenna can represents a percentage varying between approximately 70% and 98% of the maximum power, remaining the transmitted useful power significantly reduced. This situation represents that the required power in order to obtain suitable emission results must be higher to reach the same distance. Furthermore, the RFID device is not detected in the same range from all positions, presenting in certain directions a particularly low range and that makes difficult its reading.

### Description of the invention

The RFID device, object of this invention, presents technical particularities intended to facilitate the three-dimensional transmission of the radio signal and reduce the attenuation of the antenna gain by absorption of the fluids of human or animal body on which is applied the RFID device.

The device is one that comprises an encoded RFID data signal generator chip connected to dipole antenna with two opposing tracks for its transmission via radio.

According to the invention, one of the antenna tracks is bent in three-dimensional form configuring portions in at least three orthogonal planes inter se for the radiation of the signal in all directions. The antenna comprises in a plane, track portions in dipole configuration and, in the remaining planes, the track portions in configuration of reflectors.

Thus, a better radiation in the space of the power applied to the antenna is obtained, since the transmission is performed simultaneously on the three principal axes XYZ of the space. Furthermore, once applied the RFID device on a human or animal body, the power is not absorbed by the body, as happen if is placed a RFID device with flat antenna directly on the body surface. Thus a long reading distance is achieved.

In an embodiment, the bent track with three-dimensional form of the antenna comprises three elbowed portions in "C" form with a side portion emerging of the central portion and elbowed in orthogonal form in respect to the three cited portions.

In an embodiment, the bent track presents a prolonged portion of reflective track, disposed with a certain separation "w", totally or partially above of the tracks which configure the transmitter dipole.

It is anticipated that the space formed between the unbent track and the bent track is occupied by a separating piece of dielectric plastic, ceramic, resin and others dielectric materials. The separation between the top and the bottom of the bent track obeys the formula y = f(x,z), wherein "y" is the area of the dipole, "x" the separation between planes, and "z" the dielectric properties of the material of the piece which separates both planes.

The antenna is tuned in a frequency range in UHF between 860 megahertz and 2.5 gigahertz, which allows work with RFID signal generator chips different within a same physical configuration. The antenna presents a gain attenuation comprised from 1% to 20% applied on a human or animal body, which represents a great improvement of the performance, allowing thus a higher range with a decreased required power.

The RFID device can be incorporated in the most diverse objects and accessories that can carry a person or animal. Thus, it has been anticipated that the RFID device is incorporated in a wrist or foot bracelet, in a miniature card to wear in the jacket lapel of a person, a lapel pin for access control, a flat card which can be hung on the animal identification collar, and others.

### Description of the drawings

In order to complement the description that is being made and with the object of help to a better understanding of the characteristics of the invention, the present specification is accompanied by a set of drawings in which, with illustrative and non limitative character, it has been represented the following:
- Figure 1 shows a perspective view of a RFID device with the side portion configuration.
- Figure 2 shows a perspective view of a RFID device with a bent track without side portion, in which the corresponding track to the side portion is embedded at the edge of the other three portions.
- Figure 3 shows a detail of a section of a practical embodiment in which the device of the invention is incorporated within a bracelet for its use as identification placed on the wrist of a person.

### Preferred embodiment of the invention

As can be seen in the referred figures, the RFID device comprises an encoded RFID data signal generator chip (1) connected to an dipole antenna with two opposing tracks (2 y 3) for its transmission via radio. A track (2) of the antenna is disposed flat and the other track (3) of the antenna is bent in three-dimensional form configuring at least three orthogonal planes inter se for the radiation of the signal in all directions.

The bent track (3) of the antenna as a three-dimensional form comprises three portions (31, 32, and 33) elbowed in a "C" form with a side portion (34) emerging of the central portion (32), being said portion elbowed in orthogonal form in respect to the three cited portions (31, 32, 33).

The coplanar track (2) and portion (31) act as transmitting dipole antenna, while the remaining portions (32, 33, and 34) act as reflectors in orthogonal planes for the diffusion of the transmitted signal in three-dimensional way in the axes XYZ.

The distance between the planes defined by the track (2) and the portion (31) in respect to the parallel portion (33) depends on the formula y = f(x,z), wherein "y" is the area of the dipole (2, and 31), "x" the separation between the cited planes, and "z" the dielectric properties of the existing intermediate material.

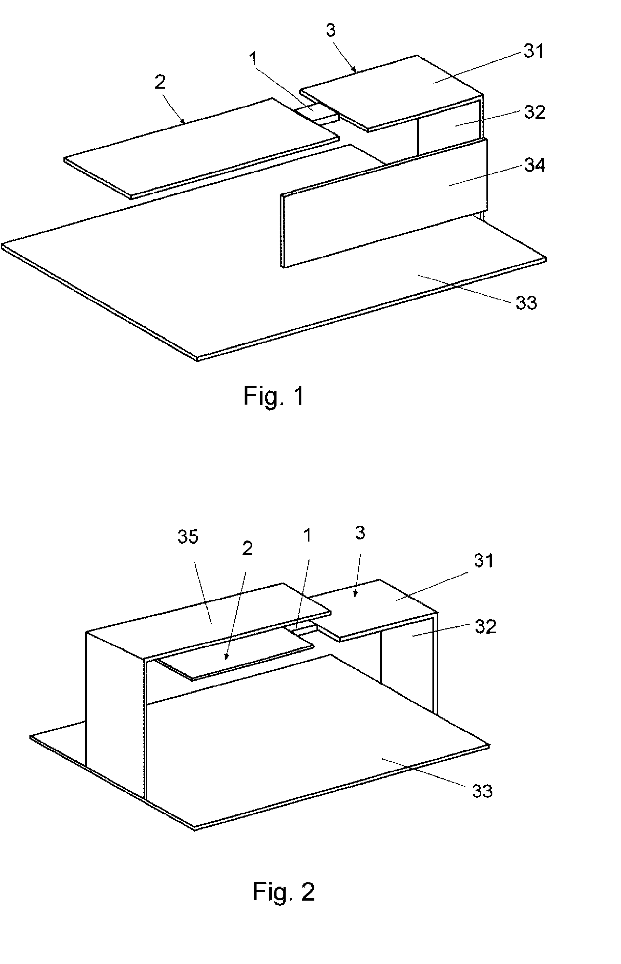

In the figure 2 it is observed as in an alternative embodiment, the bent track (3) comprises only the three elbowed portions (31, 32, 33) in "C" form. The device presents the track (3) prolonged by a portion (35) of reflective track and disposed with a certain separation "w", totally or partially above the tracks (2, and 31) which configure the transmitter dipole.

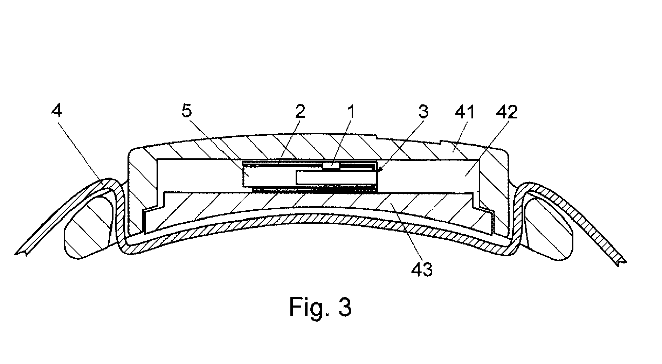

In the figure 3 it is observed the implementation of the RFID device and that comprises a wrist bracelet (4), with a box (41) in which inside is found a housing (42) closed by an access cover (43). Inside this housing (42) is disposed the RFID device, presenting, in this case, a separating piece (5) of dielectric plastic in the space between the bent track (3) and the unbent track (2).

Once having sufficiently described the nature of the invention, as well as a preferred embodiment example, it is stated to the opportune effects that the materials, shape, size and arrangement of the described elements can be modified, as long as this does not alter the essential features of the invention, the claims to which are made below.

## Claims

1. RFID device, the kind that they comprises an encoded RFID data signal generator chip (1) connected to a dipole antenna with two opposing tracks (2, and 3) for the transmission via radio, **characterized in that** one of the track (3) of the antenna is bent in three-dimensional form configuring portions (31, 32, 33, and/or 34) in at least three orthogonal planes inter se for the radiation of the signal in all directions; and **in that** the antenna comprises in a plane track portions (2, and 31) in dipole configuration and, in the remaining planes, track portions (32, 33, and/or 34) in configuration of reflectors.

2. Device, according to the claim 1, **characterized in that** the bent track (3) in three-dimensional form of the antenna comprises three portions (31, 32, and 33) elbowed in "C" form with a side portion (34) emerging of the central portion (32) and elbowed in orthogonal form in respect to the three cited portions (31, 32, 33).

3. Device, according to any of preceding claims, **characterized in that** the bent track (3) presents a prolonged portion (35) of reflective track disposed with certain separation, totally or partially above the tracks (2 and 31) which configure the transmitter dipole.

4. Device, according to any of preceding claims, **characterized in that** in the space formed between the unbent track (2) and the bent track (3) is occupied by a separating piece (5), of dielectric plastic, ceramic, resin, and/or other dielectric material.

5. Device, according to any of preceding claims, **characterized in that** the antenna is tuned in a range of frequency in UHF between 860 megahertz and 2.5 gigahertz.
